# Europäisches Patentamt
## European Patent Office
## Office européen des brevets

(19)

(11) Veröffentlichungsnummer: **0 318 800 B1**

(12) **EUROPÄISCHE PATENTSCHRIFT**

(45) Veröffentlichungstag der Patentschrift: **25.11.92**

(21) Anmeldenummer: **88119387.4**

(22) Anmeldetag: **22.11.88**

(51) Int. Cl.⁵: **C08G 18/42**, C09D 167/00, C08G 18/68, C08G 63/54

(54) **Neue Polyesterpolyole und ihre Verwendung als Polyol-Komponente in Zweikomponenten-Polyurethanlacken.**

(30) Priorität: **03.12.87 DE 3740933**

(43) Veröffentlichungstag der Anmeldung:
**07.06.89 Patentblatt 89/23**

(45) Bekanntmachung des Hinweises auf die Patenterteilung:
**25.11.92 Patentblatt 92/48**

(84) Benannte Vertragsstaaten:
**AT BE CH DE ES FR GB IT LI NL SE**

(56) Entgegenhaltungen:
**EP-A- 0 166 962**
**DE-A- 2 903 221**
**US-A- 4 474 939**
**US-A- 4 539 390**

(73) Patentinhaber: **BAYER AG**

**W-5090 Leverkusen 1 Bayerwerk(DE)**

(72) Erfinder: **Höhlein, Peter, Dr.**
**Windmuehlenweg 3 e**
**W-4152 Kempen 3(DE)**
Erfinder: **Höfer, Hans-Joachim Dr.,**
**Hittorfstrasse 17**
**W-5000 Koeln 60(DE)**
Erfinder: **Pedain, Josef, Dr.**
**Haferkamp 6**
**W-5000 Koeln 80(DE)**
Erfinder: **Schönfelder, Manfred, Dr.**
**Hoehenstrasse 126**
**W-5090 Leverkusen 3(DE)**

**Beschreibung**

Die vorliegende Erfindung betrifft neue Polyesterpolyole auf Basis ausgewählter Ausgangsmaterialien und ihre Verwendung in Kombination mit bestimmten Lackpolyisocyanaten als Bindemittel bzw. Bindemittelkomponente in Zweikomponenten-Polyurethanlacken bei der Beschichtung von Kunststofformteilen mit hoher Vergilbungsbeständigkeit.

Es ist seit langem bekannt, wenig flexible Substrate, wie z.B. Metall oder Holz mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und hohe Wetterbeständigkeit aus. Die chemischen Grundlagen dieser Lacke und Überzüge werden u.a. in "Lackkunstharze" Hans Wagner/Hans Friederich Sarx, Carl Hanser Verlag, München, Seiten 153 bis 173, 1971, beschrieben.

Die Zweikomponenten-Polyurethanlacke des Standes der Tecnik, führen jedoch oft zu hochvernetzten Lacküberzügen, deren Elastizität und Vergilbungsneigung, insbesondere bei Bestrahlung mit kurzwelligem UV-Licht den diesbezüglichen Anforderungen an Überzüge für flexible Substrate oft nicht genügt.

Besonders im Automobilbau werden in zunehmendem Umfang flexible Kunststoffteile zur Erhöhung der Sicherheit eingesetzt. So müssen z.B. in einigen Ländern Kraftfahrzeuge mit Stoßstangen ausgerüstet sein, die einen Aufprall mit einer bestimmten Geschwindigkeit (z.B. 5 MPH) gegen eine feste Barriere ohne Beschädigung überstehen, wobei gleichzeitig Funktionsteile wie Scheinwerfer, Blinkleuchten, Türen und Hauben in ihrer Funktion nicht beeinträchtigt werden dürfen. Diese und andere, noch weiter gehende Forderungen haben in vielen Ländern dazu geführt, daß die bisherigen Stoßfänger aus Metall bei PKW-Bau nicht mehr verwendet werden und komplette Vorder- und Heckteile aus hochflexiblen Materialien hergestellt werden, die die Forderungen nach schadfreier Rückstellbarkeit des Stoßfängers nach dem Aufprall erfüllen (Vermeiden von Schäden bei Bagatellunfällen).

Als hochflexible Kunststoffe für diese Anwendung haben sich u.a. halbharte elastomere Polyurethane (z.B. ®Bayflex-Typen der BAYER AG, Leverkusen), die aus Zweikomponenten-Polyurethanbildnergemischen nach der Reaktionsspritzgußtechnik in geschlossenen Formen, gegebenenfalls unter Aufschäumung hergestellt werden, thermoplastische Polyurethane (z.B. ®Desmopan-Typen der BAYER AG oder ®Texin-Typen der Mobay Chemical Corporation, Pittsburgh, USA) die nach der Spritzgußtechnik verarbeitet werden, als auch die unterschiedlichsten Kautschuktypen als geeignet erwiesen.

Im Fahrzeugbau seit einigen Jahren zum Stand der Technik gehörende Kunststoffteile auf Basis dieser Chemiewerkstoffe sind relativ groß und bestimmen deshalb wesentlich das Aussehen des Fahrzeugs. Aus diesen Grunden ist eine Lackierung der rohen Teile erforderlich. Es kommt hinzu, daß die Oberflächen der Kunststoffe bei Bewitterung abgebaut werden und daher gegen Witterungseinflüsse geschützt werden müssen.

Elastische Lackierungen sind jedoch auch für weniger elastische Kunststoffteile erforderlich, um mechanische Schädigung der Teile zu verhindern. So müssen beispielsweise harte aber zähe Thermoplaste mit hochelastischen, äußerst beständigen Lacken lackiert werden, um zu verhindern, daß der Lackfilm bei mechanischer Beschädigung oder durch andere äußere Einflüsse reißt und die Risse sich in dem kompakten Kunststoff fortsetzen.

Es gelingt zwar auch unter Verwendung der bekannten Zweikomponenten-Systeme des Standes der Technik hochflexible Lacke herzustellen, die in Bezug auf Elastizität und Kälteflexibilität vollkommen ausreichend sind. Vor allem ist dies durch Verwendung von bestimmten Polyhydroxylpolyestern als wesentliche Polyolkomponente möglich, die vorwiegend aus aliphatischen Diolen aufgebaut sind und allenfalls eine unwesentlich oberhalb 2 liegende Hydroxylfunktionalität aufweisen. Der Nachteil von Zweikomponenten-Polyurethanlacken auf Basis derartiger Polyesterdiole und der üblichen Lackpolyisocyanate besteht jedoch in dem Umstand, daß die Lacküberzüge über eine zu geringe Wetterresistenz und Kreidungsbeständigkeit verfügen und damit die Glanzhaltung der aus derartigen Lacksystemen aufgebauten Überzüge völlig unzureichend ist. Als besonders nachteilig erweist sich die Vergilbungsanfälligkeit solcher Lacksysteme bei Bestrahlung mit kurzwelligem UV-Licht. Dies gilt insbesondere für die Systeme der DE-OS 3 421 122, die ansonsten den genannten Anforderungen an elastische Kunststofflacke weitgehend entsprechen.

Es war daher die der Erfindung zugrundeliegende Aufgabe, ein neues Zweikomponenten-Polyurethanlack-System zur Verfügung zu stellen, das diesen besonderen Anforderungen genügt und insbesondere für die Lackierung von elastischen Kunststoffteilen optimal geeignet ist. Das neue Lacksystem sollte insbesondere folgenden Anforderungen gleichzeitig genügen:

1. Vergilbungsfreie Filmoberflächen bei Einwirkung von kurzwelligem UV-Licht:

Der Lackfilm muß der Bestrahlung mit kurzwelligem UV-Licht (Wellenlänge <400 nm) über einen

Zeitraum von mindestens 200 h ohne Vergilbung standhalten.

2. Tieftemperatur-Elastizität:

Auch bei -40° C darf der Film bei den genannten Aufprallgeschwindigkeiten des Kunststoffs nicht reißen. Die mechanischen Eigenschaften des Kunststoffs sollen durch die Lackierung möglichst wenig beeinträchtigt werden.

3. Gute Glanzhaltung:

Der Lackfilm auf den Kunststoffteilen sollte möglichst haltbar sein. Er darf unter Witterungseinflüssen nicht schneller abbauen als derjenige auf der Karosserie.

4. Keine Nachversprödung bei Bewitterung:

Auch nach längerer Bewitterung darf der Film nicht nachverspröden, d.h., die Tieftemperaturelastizität soll sich während der Bewitterung nicht verschlechtern.

5. Niedrige Trockentemperatur:

Die Wärmestandfestigkeit solcher großen Kunststoffteile ist begrenzt. Die erforderlichen Trockentemperaturen und -zeiten sollten daher aus diesen, aber auch aus Gründen der Energieersparnis möglichst niedrig sein.

6. Reparaturfähigkeit:

Die Trocknungsbedingungen eines solchen Systems sollten neben der Erstlackierung auch eine Reparaturlackierung bei 80° C oder Raumtemperatur ermöglichen.

Wie jetzt überraschenderweise gefunden wurde, gelingt es durch die Verwendung der nachstehend näher beschriebenen erfindungsgemäßen Polyesterpolyole auf Basis ausgewählter Ausgangsmaterialien als Polyhydroxylkomponente bzw. wesentlichen Teil der Polyhydroxylkomponente in Zweikomponenten-Polyurethanlacken die gestellte Aufgabe zu lösen.

Gegenstand der Erfindung sind Polyesterpolyole des Hydroxylzahlbereichs von 80 bis 250, die Umsetzungsprodukte von

a) 52 bis 60 Mol-% einer Polyolkomponente mit

b) 48 bis 40 Mol-% einer Dicarbonsäure-Komponente darstellen, dadurch gekennzeichnet, daß

a) die Polyolkomponente aus (i) 2 bis 30 Mol-% eines zweiwertigen aliphatischen Alkohols mit mindestens zwei Kohlenstoffatomen, der von Neopentylglykol verschieden ist oder eines Gemischs mehrerer derartiger Alkohole, (ii) 5 bis 40 Mol-% eines mindestens dreiwertigen aliphatischen Alkohols mit mindestens 3 Kohlenstoffatomen oder eines Gemischs mehrerer derartiger Alkohole, (iii) 20 bis 60 Mol-% Bis-(hydroxymethyl)-cyclohexan und (iv) 10 bis 50 Mol-% Neopentylglykol besteht, und

b) die Dicarbonsäurekomponente aus (v) 50 bis 99 Mol-% einer aliphatischen, gesättigten Dicarbonsäure oder einem Anhydrid einer derartigen Säure mit mindestens 2 Kohlenstoffatomen oder eines Gemischs mehrerer derartiger Säuren oder Anhydride und (vi) 0,5 bis 50 Mol-% einer aliphatischen ungesättigten Dicarbonsäure oder deren Anhydrid mit mindestens 4 Kohlenstoffatomen oder Gemischen derartiger Säuren oder Anhydride besteht.

wobei sich die unter a) und b) gemachten Prozentangaben jeweils zu 100 ergänzen.

Gegenstand der Erfindung ist auch die Verwendung dieser erfindungsgemäßen Polyesterpolyole, gegebenenfalls in Abmischung mit anderen organischen Polyhydroxylverbindungen als Bindemittelkomponente für Zweikomponenten-Polyurethanlacke, die Lackpolyisocyanate, sowie gegebenenfalls die in der Polyurethantechnologie üblichen Hilfs- und Zusatzmittel enthalten, bei der Herstellung von Lacküberzügen auf Kunststofformteilen.

Die besonders gute Eignung der erfindungsgemäßen Polyesterpolyole für die erfindungsgemäße Verwendung ist auf die erfindungsgemäße Auswahl der den Polyesterpolyolen zugrundeliegenden Ausgangsmaterialien und deren Mengenverhältnis zurückzuführen. Die erfindungsgemäßen Polyesterpolyole weisen Hydroxylzahlen innerhalb des Bereichs von 80 bis 250, vorzugsweise 120 bis 200, Säurezahlen von unter 12, vorzugsweise 1,0 bis 10 und ein mittleres, aus der Stöchiometrie der eingesetzten Ausgangsmaterialien berechenbares Molekulargewicht von 800 bis 10 000, vorzugsweise 800 bis 5000 auf. Die erfindungsgemäßen Polyesterpolyole sind hochviskose, farblose klare Harze, die in Lacklösungsmitteln wie beispielsweise Kohlenwasserstoffen wie Toluol, Xylol oder höheren Alkylbenzolen, Estern wie Ethylacetat, Butylacetat, Methylglykolacetat, Ethylglykolacetat, Methoxypropylacetat, Ketonen wie Methylethylketon oder Methylisobutylketon oder deren Gemischen klar löslich sind.

Erfindungswesentlich ist außerdem, daß die erfindungsgemäßen Polyhydroxypolyesterpolyole aus den obengenannten ausgewählten Aufbaukomponenten a) und b) hergestellt worden sind.

Die Polyolkomponente a) setzt sich aus den Einzelbestandteilen (i) bis (iv) zusammen.

Bei der Einzelkomponente (i) handelt es sich um zweiwertige aliphatische Alkohole mit mindestens 2, vorzugsweise 2 bis 6 Kohlenstoffatomen mit Ausnahme von Neopentylglykol wie z.B. Ethylenglykol, Propandiol-1,2 und -1,3, Butandiol-1,2 und -1,4, Pentandiol-1,5 und, besonders bevorzugt, Hexandiol-1,6. Gemische derartiger Diole können ebenfalls als Komponente (i) verwendet werden. Die Komponente (i) wird in einer Menge von 2 bis 30 Mol-%, vorzugsweise 10 bis 30 Mol-%, bezogen auf die Gesamtmenge der Komponente a), eingesetzt.

Bei der Komponente (ii) handelt es sich um höher als zweiwertige aliphatische Alkohole mit mindestens 3, vorzugsweise 3 bis 5 Kohlenstoffatomen wie z.B. Trimethylolpropan, Glycerin und/oder Pentaerythrit. Die Komponente (ii) wird in Mengen von 5 bis 40, vorzugsweise 10 bis 35 Mol-%, bezogen auf die Gesamtmenge der Komponente a) eingesetzt.

Bei der Komponente (iii) handelt es sich um 1,2-, 1,3-und insbesondere 1,4-Bis-(hydroxymethyl)-cyclohexan. Die Komponente (iii) wird in Mengen von 20 bis 60 Mol-%, vorzugsweise 25 bis 55 Mol-%, bezogen auf die Gesamtmenge der Komponente a) eingesetzt.

Bei der Komponente (iv) handelt es sich um Neopentylglykol (2,2-Dimethyl-propandiol-1,3). Die Komponente (iv) wird in Mengven von 10 bis 50 Mol-%, vorzugsweise 15 bis 45 Mol-%, bezogen auf die Gesamtmenge der Komponente a) eingesetzt.

Bei der Dicarbonsäurekomponente b) handelt es sich um ein Gemisch aus den Einzelkomponenten (v) und (vi). In dem Gemisch liegen 50 bis 99,5, vorzugsweise 60 bis 98 Mol-% der Komponente (v) und 0,5 bis 50, vorzugsweise 2 bis 50 Mol-% der Komponente (vi), bezogen auf die Gesamtmenge der Komponente b), vor.

Bei der Komponente (v) handelt es sich um eine aliphatische gesättigte Dicarbonsäure mit mindestens 2, vorzugsweise 4 bis 6 Kohlenstoffatomen, wie z.B. Oxalsäure, Bernsteinsäure, Glutarsäure und insbesondere Adipinsäure. Gemische derartiger Säuren können selbstverständlich ebenfalls eingesetzt werden. Grundsätzlich möglich, jedoch im allgemeinen nicht üblich wäre auch die Verwendung der intramolekularen Säureanhydride dieser Säuren.

Bei der Komponente (vi) handelt es sich um aliphatische ungesättigte Dicarbonsäuren oder deren Anhydride mit mindestens 4, vorzugsweise 4 bis 5 Kohlenstoffatomen wie beispielsweise Fumarsäure, Maleinsäure oder Itaconsäure bzw. die Anhydride dieser Säuren. Besonders bevorzugt wird als Komponente (vi) Maleinsäureanhydrid eingesetzt. Beliebige Gemische derartiger Säuren bzw. Säureanhydride können ebenfalls als Komponente (vi) verwendet werden.

Die im Zusammenhang mit den Komponenten a) und b) gemachten Prozentangaben ergänzen sich jeweils zu 100.

Bei der Herstellung der Polyesterpolyole kommen 52 bis 60, vorzugsweise 52 bis 58 Mol-% der Komponente a) und 48 bis 40, vorzugsweise 48 bis 42 Mol-% der Komponente b) zum Einsatz, wobei sich auch hier die genannten Prozentangaben auf 100 ergänzen.

Die Herstellung der erfindungsgemäßen Polyester erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff. oder von H. Wagner und H. F. Sarx in "Lokkunstharze", Carl Hanser Verlag, München (1971), Seiten 86 bis 152 ausführlich beschrieben sind. Die Veresterung erfolgt gegebenenfalls in Gegenwart einer katalytischen Menge eines üblichen Veresterungskatalysators wie z.B. Säuren, Basen oder Übergangsmetallverbindungen wie z.B. Titantetrabutylat bei ca. 80 bis 260°C, vorzugsweise 100 bis 230°C. Die Veresterungsreaktion wird so lange durchgeführt, bis die angestrebten Werte für die Hydroxyl- und Säurezahl erreicht sind.

Bei der erfindungsgemäßen Verwendung der erfindungsgemäßen Polyesterpolyole werden diese gegebenenfalls in Abmischung mit anderen, aus der Polyurethanlacktechnologie bekannten organischen Polyhydroxylverbindungen als Polyhydroxyl-Komponente eingesetzt. Bei diesen anderen Polyhydroxylverbindungen kann es sich um die üblichen Polyester-, Polyether- oder Polyacrylat-Polyole handeln. Vorzugsweise werden als weitere organische Polyhydroxylverbindungen, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind in Lacklösungsmitteln der bereits beispielhaft genannten Art lösliche Copolymerisate von 2-Hydroxyethyl- und/oder 2- bzw. 3-Hydroxypropyl(meth)-acrylat mit anderen olefinisch ungesättigten Monomeren wie z.B. Methylacrylat, Methylmethacrylat, Styrol, Acrylsäure, Acrylnitril, Methacrylnitril u.dgl. Der Hydroxylgruppengehalt dieser Polyacrylatpolyole liegt im allgemeinen zwischen 1 und 5 Gew.-%.

Bei der erfindungsgemäßen Verwendung der erfindungsgemäßen Polyesterpolyole können diese in Abmischung mit bis zu 90, vorzugsweise bis zu 50 Hydroxyläquivalent-%, bezogen auf alle Polyhydroxylverbindungen, an anderen Polyolen der beispielshaft genannten Art zum Einsatz gelangen. Besonders bevorzugt werden jedoch die erfindungsgemäßen Polyesterpolyole als alleinige Polyol-Komponente bei der erfindungsgemäßen Verwendung eingesetzt.

Reaktionspartner für die Polyol-Komponente bei der erfindungsgemäßen Verwendung der erfindungsgemäßen Polyesterpolyole sind die üblichen "Lackpolyisocyanate", d.h. vor allem die bekannten, Urethangruppen oder insbesondere Biuretgruppen bzw. Isocyanuratgruppen aufweisende Modifizierungsprodukte von einfachen Diisocyanaten wie z.B. 1,6-Diisocyanatohexan, 1-Isocyanato-3,3,5-trimethyl-5-isocyanatomethylcyclohexan (Isophorondiisocyanat), 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen Isocyanatgruppen eingesetzt.

Zu den Urethangruppen aufweisenden "Lackpolyisocyanaten" gehören insbesondere die Umsetzungsprodukte von 2,4- und gegebenenfalls 2,6-Diisocyanatotoluol mit unterschüssigen Mengen an Trimethylolpropan bzw. dessen Gemischen mit einfachen Diolen wie z.B. den isomeren Propan- oder Butandiolen. Die Herstellung derartiger, Urethangruppen aufweisender Lackpolyisocyanate in praktisch monomerenfreier Form ist beispielsweise in DE-PS 1 090 196 beschrieben.

Zu den Biuretgruppen aufweisenden Lackpolyisocyanaten, die bei der erfindungsgemäßen Verwendung ganz besonders bevorzugt sind, gehören insbesondere jene auf Basis von 1,6-Diisocyanatohexan, deren Herstellung beispielsweise in EP-B1-000 3505, DE-PS 1 101 394, US-PS 3 358 010 oder US-PS 3 903 127 beschrieben ist.

Zu den ebenfalls bevorzugten, Isocyanuratgruppen aufweisenden Polyisocyanaten gehören insbesondere die Isocyanatgruppen aufweisenden Trimerisate bzw. Mischtrimerisate der oben beispielhaft genannten Diisocyanate, wie z.B. die Isocyanuratgruppen aufweisenden Polyisocyanate auf Basis von Diisocyanatotoluol gemäß GB-PS 1 060 430, GB-PS 1 506 373 oder GB-PS 1 485 564, die Mischtrimerisate von Diisocyanatotoluolen mit 1,6-Diisocyanatohexan, die beispielsweise gemäß DE-PS 1 644 809 oder DE-OS 3 144 672 zugänglich sind, und insbesondere die aliphatischen bzw. aliphatisch-cycloaliphatischen Trimerisate bzw. Mischtrimerisate auf Basis von 1,6-Diisocyanatohexan und/oder Isophorondiisocyanat, die beispielsweise gemäß US-PS 4 324 879, US-PS 4 288 586, DE-OS 3 100 262, DE-OS 3 100 263, DE-OS 3 033 860 oder DE-OS 3 144 672 zugänglich sind. Die bei der erfindungsgemäßen Verwendung zum Einsatz gelangenden Lackpolyisocyanate weisen im allgemeinen einen Isocyanatgehalt von 5 bis 25 Gew.-% und einen Restgehalt an, zu ihrer Herstellung eingesetzten, monomeren Diisocyanaten von vorzugsweise unter 2 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden Zweikomponenten-Polyurethanlacken liegen die Polyolkomponente und die Polyisocyanatkomponente in einem Äquivalentverhältnis von Isocyanatgruppen zu Hydroxylgruppen von 10:1 bis 1:2, vorzugsweise 1,5:1 bis 1:1,2 entsprechenden Mengen vor. Die durch Vermischen der beiden Komponenten erhaltenen Zweikomponenten-Bindemittel haben nur eine begrenzte Verarbeitungszeit von ca. 2 bis 48 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs-und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, Butylacetat, Methylethylketon, Methylisobutylketon, Ethylenglykolmonoethylether-acetat, Methoxypropylacetat, Toluol, Xylol, Testbenzin oder beliebige Gemische dieser Lösungsmittel.

Die Lösungsmittel werden in einer Menge von bis zu 70, vorzugsweise bis zu 40 Gew.-%, bezogen auf Gesamtgemisch, mitverwendet.

Weitere, gegebenenfalls mitzuverwendende Hilfs- und Zusatzmittel sind z.B. Weichmacher wie z.B. Trikresylphosphat oder Phthalsäurediester, Chlorparaffine, Pigmente und Füllstoffe, wie Titandioxid, Bariumsulfat, Kreide, Ruß; Katalysatoren wie z.N. N,N-Dimethylbenzylamin, N-Methylmorpholin, Bleioctoat oder Dibutylzinndilaurat; Verlaufmittel; Verdickungsmittel, gegebenenfalls Stabilisatoren, wie substituierte Phenole, organofunktionelle Silane als Haftvermittler und Lichtschutzmittel. Derartige Lichtschutzmittel sind beispielsweise sterisch gehinderte Amine, wie sie z.B. in DE-OS 2 417 353 (= US-PS 4 123 418 und US-PS 4 110 304) und DE-OS 2 456 864 (= US-PS 3 993 655 und US-PS 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Wegen der verhältnismäßig langsam verlaufenden Trocknung bei Raumtemperatur ist jedoch oftmals eine Temperaturerhöhung auf ca. 60 bis 120°C, vorzugsweise 80 bis 100°C während eines Zeitraums von 20 bis 40 Minuten empfehlenswert. Eine höhere Trocknungstemperatur und somit eine Verkürzung des Einbrennprozesses ist zwar möglich, jedoch besteht die Gefahr, daß sich die mit den Lacken beschichteten Kunststoffteile verformen.

Die erfindungsgemäß zum Einsatz gelangenden Lacke eignen sich vor allem für die Lackierung von Kunststoffen, jedoch auch für Metalle und andere Substrate. Besonders vorteilhaft eignen sich die erfindungsgemäß zum Einsatz gelangenden Lacke zum Lackieren von flexiblen Kunststoffteilen, wie sie beim Automobilbau Anwendung finden.

Wegen der gleichermaßen guten Eignung der erfindungsgemäß zum Einsatz gelangenden Lacke für Kunststoffe und Metalle eignen sich diese insbesondere auch hervorragend zur Lackierung von Konstruktionen wie z.B. Außenteilen von Automobilen, die in moderner Gemischtbauweise aus Kunststoff- und Metallteilen hergestellt werden. Die besonderen Vorteile der erfindungsgemäß zum Einsatz gelangenden Lacke begünstigen diese "on line"-Lackierung von Automobilaußenteilen, da die Härtung der Lackfilme bereits bei niedrigen Temperaturen erfolgen kann, so daß die Kunststoffe keiner übermäßigen Temperaturbelastung ausgesetzt werden, und da die resultierenden Lackfilme eine ausgezeichnete Witterungsbeständigkeit und Elastizität aufweisen, so daß dekorative Lackierungen für eine lange Zeitdauer unverändert erhalten bleiben und Beanspruchungen durch Stoß oder Schlag schadlos überstehen. Hervorzuheben ist in diesem Zusammenhang insbesondere auch die ausgezeichnete Steinschlagfestigkeit von erfindungsgemäß hergestellten Automobil-Decklackierungen. Die mit den erfindungsgemäß zum Einsatz gelangenden Zweikomponenten-Lacken erhaltenen Lackfilme erfüllen in optimaler Weise zwei an sich gegensätzliche Forderungen nämlich eine ausgezeichnete Tieftemperatur-Elastizität bei gleichzeitig hoher Glanzhaltung und Vergilbungsbeständigkeit bei Bestrahlung mit Licht niedriger Wellenlänge, z.B. kurzwelliges UV-Licht.

Die erfindungsgemäß zum Einsatz gelangenden Lacke können selbstverständlich nach allen üblichen Methoden der Lacktechnologie wie z.B. Streichen, Spritzen oder Tauchen auf die zu beschichtenden Substrate aufgetragen werden. Die erfindungsgemäßen Lacke eignen sich sowohl zur Herstellung von Grundierungen als auch zur Herstellung von Zwischenschichten als auch zur Herstellung von Deckschichten auf den zu lackierenden Substraten.

Die nachfolgenden Beispiele dienen zur weiteren Erläuterung der Erfindung.

## Beispiele

Allgemeine Herstellungsvorschrift für die Polyesterpolyole:

Die Polyole und die ungesättigte(n) Dicarbonsäure(n)/Anhydrid(e) werden in einen Reaktor, der mit Rührer, Heizung, automatischer Temperatursteuerung, Kolonne und Vorlage ausgerüstet ist, eingewogen und auf 100 bis 150°C erhitzt, wobei ein Stickstoffstrom durch die inhomogene Rohstoffmischung durchgeleitet wird. Nach Zugabe der restlichen Dicarbonsäuren wird das Rohstoffgemisch innerhalb von 4 bis 8 Stunden unter Rühren und Durchleiten von Stickstoff auf 200°C aufgeheizt. Dabei wird die am Kopf der Kolonne gemessene Temperatur bei maximal 105°C gehalten. Die Schmelze wird hierbei homogen und klar. Sobald die Kopftemperatur 90°C unterschreitet, wird die Kolonne entfernt und mit erhöhtem Stickstoffstrom bis zu einer Säurezahl <2 mg KOH/g Substrat auskondensiert.

Es werden farblose Harze erhalten, die in Methoxypropylacetat bzw. Butylacetat oder Mischungen derselben gelöst werden.

Die Zusammensetzung und die Daten der einzelnen, auf diesem Wege hergestellten Polyester sind in den Beispielen 1 bis 9 angegeben. Die gemachten Mengenangaben in "Mol" beziehen sich, wie aus den Gewichtsangaben in "g" ersichtlicht, nicht auf die tatsächliche Anzahl der jeweiligen "Mole" sondern auf das Molverhältnis.

## Beispiel 1 (erfindungsgemäß)

Polyester aus

| 1,0 Mol Hexandiol-1,6 | 500 g |
|---|---|
| 1,0 Mol Trimethylolpropan | 567 g |
| 1,5 Mol 1,4-Bis(hydroxymethyl)-cyclohexan | 915 g |
| 1,5 Mol Neopentylglykol | 662 g |
| 3,92 Mol Adipinsäure | 2426 g |
| 0,08 Mol Maleinsäureanhydrid | 33 g |
| Hydroxylzahl: 149<br>Säurezahl: 1,8 | |

Beispiel 2 (erfindungsgemäß)

| 1,0 Mol Hexandiol-1,6 | 509 g |
|---|---|
| 1,0 Mol Trimethylolpropan | 578 g |
| 1,5 Mol 1,4-Bis(hydroxymethyl)-cyclohexan | 931 g |
| 1,0 Mol Neopentylglykol | 449 g |
| 0,5 Mol Ethylenglykol | 134 g |
| 3,92 Mol Adipinsäure | 2487 g |
| 0,08 Mol Maleinsäureanhydrid | 33 g |
| Hydroxylzahl: 156<br>Säurezahl: 2,2 | |

Beispiel 3 (erfindungsgemäß)

| 1,0 Mol Hexandiol-1,6 | 502 g |
|---|---|
| 1,0 Mol Trimethylolpropan | 569 g |
| 1,5 Mol 1,4-Bis(hydroxymethyl)-cyclohexan | 918 g |
| 1,5 Mol Neopentylglykol | 665 g |
| 3,8 Mol Adipinsäure | 2350 g |
| 0,2 Mol Maleinsäureanhydrid | 90 g |
| Hydroxylzahl: 141<br>Säurezahl: 1,9 | |

Vergleich 1

| 4,0 Mol Hexandiol-1,6 | 1921 g |
|---|---|
| 1,0 Mol Trimethylolpropan | 545 g |
| 2,5 Mol Isophthalsäure | 1688 g |
| 1,0 Mol Adipinsäure | 594 g |
| 0,5 Mol Phthalsäureanhydrid | 301 g |
| Hydroxylzahl: 147<br>Säurezahl: 1,8 | |

Beispiel 4 (erfindungsgemäß)

| 1,0 Mol Hexandiol-1,6 | 504 g |
|---|---|
| 1,0 Mol Trimethylolpropan | 571 g |
| 1,5 Mol 1,4-Bis(hydroxymethyl)-cyclohexan | 921 g |
| 1,5 Mol Neopentylglykol | 667 g |
| 3,71 Mol Adipinsäure | 2290 g |
| 0,29 Mol Maleinsäureanhydrid | 136 g |
| Hydroxylzahl: 140 Säurezahl: 1,8 | |

Vergleich 2

| 4,0 Mol Hexandiol-1,6 | 1918 g |
|---|---|
| 1,0 Mol Trimethylolpropan | 545 g |
| 0,95 Mol Isophthalsäure | 636 g |
| 0,95 Mol Adipinsäure | 560 g |
| 1,9 Mol Hexahydrophthalsäureanhydrid | 1181 g |
| 0,5 Mol Maleinsäureanhydrid | 91 g |
| Hydroxylzahl: 137 Säurezahl: 1,9 | |

Beispiel 5 (erfindungsgemäß)

| 0,5 Mol Hexandiol-1,6 | 259 g |
|---|---|
| 0,5 Mol Butandiol-1,4 | 198 g |
| 1,0 Mol Trimethylolpropan | 589 g |
| 1,5 Mol 1,4-Bis(hydroxymethyl)-cyclohexan | 949 g |
| 1,0 Mol Neopentylglykol | 458 g |
| 0,5 Mol Ethylenglykol | 136 g |
| 3,8 Mol Adipinsäure | 2441 g |
| 0,2 Mol Maleinsäureanhydrid | 86 g |
| Hydroxylzahl: 162 Säurezahl: 2,2 | |

Beispiel 6 (erfindungsgemäß)

| 1,0 Mol Hexandiol-1,6 | 507 g |
|---|---|
| 1,0 Mol Trimethylolpropan | 575 g |
| 1,5 Mol 1,4-Bis(hydroxymethyl)-cyclohexan | 927 g |
| 1,5 Mol Neopentylglykol | 671 g |
| 3,51 Mol Adipinsäure | 2169 g |
| 0,49 Mol Maleinsäureanhydrid | 228 g |
| Hydroxylzahl: 153 Säurezahl: 1,8 | |

Beispiel 7 (erfindungsgemäß)

| | |
|---|---|
| 1,0 Mol Hexandiol-1,6 | 510 g |
| 1,0 Mol Trimethylolpropan | 579 g |
| 1,5 Mol 1,4-Bis(hydroxymethyl)-cyclohexan | 934 g |
| 1,5 Mol Neopentylglykol | 676 g |
| 3,2 Mol Adipinsäure | 2021 g |
| 0,8 Mol Maleinsäureanhydrid | 339 g |
| Hydroxylzahl: 156 Säurezahl: 2,0 | |

Beispiel 8 (erfindungsgemäß)

| | |
|---|---|
| 1,0 Mol Hexandiol-1,6 | 516 g |
| 1,0 Mol Trimethylolpropan | 586 g |
| 1,5 Mol 1,4-Bis(hydroxymethyl)-cyclohexan | 945 g |
| 1,5 Mol Neopentylglykol | 684 g |
| 2,8 Mol Adipinsäure | 1789 g |
| 1,2 Mol Maleinsäureanhydrid | 515 g |
| Hydroxylzahl: 145 Säurezahl: 2,1 | |

Beispiel 9 (erfindungsgemäß)

| | |
|---|---|
| 1,0 Mol Hexandiol-1,6 | 538 g |
| 1,0 Mol Trimethylolpropan | 611 g |
| 1,0 Mol 1,4-Bis(hydroxymethyl)-cyclohexan | 657 g |
| 1,5 Mol Neopentylglykol | 713 g |
| 3,8 Mol Adipinsäure | 2532 g |
| 0,2 Mol Maleinsäureanhydrid | 90 g |
| Hydroxylzahl: 108 Säurezahl: 1,7 | |

Beispiel 10 (Verwendung)

Dieses Beispiel beschreibt die Herstellung gebrauchsfertiger Lacke auf Basis der Polyesterpolyole gemäß Beispiel 1 bis 9, deren Applikation und die Prüfung der resultierenden Lackfilme.

Zur Beurteilung der allgemeinen Lackeigenschaften wurden Weißlacke hergestellt; dabei wurden die Polyesterpolyole aus den Beispielen 1 bis 9 mit verschiedenen Zusätzen sowie Weißpigment versehen und auf einem Schüttelbock ("Red Devil") angerieben.

Anschließend wurde mit einem Lackpolyisocyanat versetzt, wobei ein NCO/OH-Verhältnis von ca. 1,2:1 eingehalten wurde. Als "Lackpolyisocyanat" diente ein Biuretpolyisocyanat auf Basis von 1,6-Diisocyanatohexan, bestehend aus einem Gemisch von N,N′,N″-Tris-(isocyanatohexyl)biuret mit seinen höheren Homologen, 75 %ig gelöst in Ethylglykolacetat/Xylol (Volumenverhältnis = 1:1), NCO-Gehalt der Lösung: 16,8 Gew.-%, Gehalt der Lösung an freiem 1,6-Diisocyanatohexan: unter 0,7 %.

Bezogen auf Festharz (Summe der festen Anteile an Polyol und Polyisocyanat) wurden folgende Anteile an Zusatzstoffen verwendet:

9

Tabelle 1

| Bestandteile | Gew.-% fest auf fest |
|---|---|
| Zinkoctoat (10 % in 1-Methoxypropylacetat-2) | 0,2 |
| Siliconöl als Verlaufsmittel (®Baysilon-Lackadditiv OL 17 der BAYER AG; 10 % in 1-Methoxypropylacetat-2) | 0,1 |
| (®Tinuvin 292 (Lichtschutzmittel der Fa. Ciba-Geigy, Basel; 10 % in Xylol) | 1,0 |
| (®Tinuvon 900 (Lichtschutzmittel der Fa. Ciba-Geigy, Basel; 10 % in Xylol) | 1,0 |
| Titandioxid (Rutiltyp; ®Kronos 2160 der Fa. Kronos-Titan, Leverkusen) | 60,0 |
| Mittel zur Verhinderung des Absetzens (® Bentone 38 der Fa. Kronos-Titan, Leverkusen; 10 %iger Aufschluß in ®Solvesso/®Antiterra U 17:1) | 1,0 |

Als Lösemittel wurde ein Gemisch aus Ethylacetat, 1-Methoxypropylacetat-2 und Methylethylketon (1:1:1) verwendet; es wurde verdünnt bis auf einen Gehalt von:

33 Gew.-%        Bindemittel
20 Gew.-%        Pigment
ca. 1 Gew.-%      Additive
ca. 46 Gew.-%     Lösemittel

Die Auslaufzeit (DIN 53 211; 4 mm-Düse) betrug ca. 18 Sekunden. Damit sind die Lacke spritzfertig eingestellt. Die Standzeit bei Aufbewahrung im geschlossenen Gebinde betrug ca. 60 bis 80 Stunden.

Die Lacke wurden auf Glasplatten aufgezogen (Schichtdicke ca. 100 $\mu$m Naßfilm), 45 Minuten bei 80°C getrocknet und 14 Tage bei Raumtemperatur gelagert. Die Trockenfilmdicke betrug ca. 50 $\mu$m.

Anschließend wurden die Härte nach König (DIN 53 157), der Glanz nach Gardner bei 60° (DIN 67 530), die Anlösbarkeit durch verschiedene Lösemittel sowie die Teerbeständigkeit geprüft. Die erzielten Ergebnisse waren durchweg sehr gut.

Ferner wurden die Lacke zur Prüfung der Kälteflexibilität auf zuvor grundierte, 3 mm dicke Kunststoffplatten aus ®Bayflex 91 (Bayer AG, Leverkusen) aufgespritzt; 45 Minuten bei 80°C getrocknet und 14 Tage bei Raumtemperatur gelagert; die Trockenfilmdicke betrug ca. 35 $\mu$m.

Hieraus gefertigte, 2 cm breite und 15 cm lange Streifen wurden bei verschiedenen Temperaturen (Raumtemperatur; 5°C; 0°C; -5°C,......, -50°C) in einer Kältekammer ca. 30 Minuten gelagert und anschließend bei der betreffenden Temperatur in der Kammer um eine 1-inch-Dorn gebogen. Diejenige Temperatur, bei der der Lackfilm reißt, gilt als Kriterium für die Kälteflexibilität. Die aus den Polyesterpolyolen der Beispiele 1 bis 9 hergestellten Lacke entsprachen danach höchsten Anforderungen an die Elastizität auch bei tiefen Temperaturen; auch bei -50°C rissen die Lackfilme nicht.

Zur Prüfung der Wetterbeständigkeit von Beschichtungen werden oft Kurzbewitterungstests durchgeführt, um schneller vergleichende Beurteilungen zu ermöglichen. Hierzu werden die Proben einer intensiven Strahlungs-und Feuchtigkeitsbelastung ausgesetzt, die nur wenige Materialien ohne Schädigung überstehen. Da gute Ergebnisse bei diesen Tests aber heute zunehmend gefordert werden, war es Ziel der vorliegenden Entwicklung, mittels geeigneter neuartiger Polyesterpolyole zu Lacken zu gelangen, die neben allgemein hohem Eigenschaftsniveau (Elastizität, Glanz, Chemikalienbeständigkeit etc.) eine deutlich verbesserte Beständigkeit in der Kurzbewitterung gegenüber vergleichbaren Beschichtungen aufweisen.

Vorrangig war hier die Erzielung einer hohen Vergilbungsresistenz bei Bestrahlung mit kurzwelligem UV-Licht im QUV-Test (QUV Accelerated Weathering Tester; Prüfung nach ASTM G 53-77).

Hierzu wurden auf Aluminiumbleche (68 mm x 150 mm), die zuvor grundiert und mit weißem Basislack beschichtet wurden, Klarlacke auf Basis der Polyesterpolyole in den Beispielen 1 bis 9 appliziert. Zur Herstellung derselben wurde in der Formulierung der Tabelle 1 der Anteil an Titandioxid und ®Bentone weggelassen und mittels Lösergemisch auf ca. 43 % Festkörpergehalt eingestellt. Nach Aufspritzen und Trocknen der Lacke (45 Minuten bei 80°C) wurden diese 14 Tage bei Raumtemperatur gelagert und anschließend im QUV-Gerät (Fa. Q-Panel Company) geprüft. Dabei wurde im Zyklus jeweils 4 h mit intensivem, ungefiltertem UV-Licht im Wellenlängenbereich von ca. 280 bis 370 nm (Maximum bei 313 nm) bestrahlt bzw. 4 h im Dunkeln betaut, bei einer Gesamtdauer von 200 h. Nach dem Abwaschen der Proben wird mittels eines Farbmeßgerätes die Gesamtfarbdifferenz $\Delta$ E (gegenüber der nicht bewitterten Platte) als Maß für die aufgetretene Vergilbung bestimmt.

Für die aus den Polyesterpolyolen in Beispiel 1 bis 9 hergestellten Lacke 1 bis 9 und die Vergleichslacke 1 und 2 auf Basis der Polyether gemäß Vergleichsbeispielen 1 und 2 ergaben sich die Werte der Tabelle 2.

### Tabelle 2

| Lack-Nr. | 1 | 2 | 3 | Ver-gl. 1 | 4 |
|---|---|---|---|---|---|
| Gesamtfarbdifferenz Δ E (nach 200 h QUV) | 5,0 | 5,2 | 4,9 | 15,8 | 4,6 |

| Lack-Nr. | Ver-gl. 2 | 5 | 6 | 7 | 8 | 8 |
|---|---|---|---|---|---|---|
| Gesamtfarbdifferenz Δ E (nach 200 h QUV) | 15,2 | 4,8 | 4,3 | 4,3 | 4,0 | 5,1 |

Diskussion der Resultate:

Rißbildung, Blasen- oder Fleckenbildung trat bei keiner der Proben auf. Die Ergebnisse der Farbenmessungen machen insbesondere die ganz ausgezeichnete UV-Beständigkeit der erfindungsgemäßen Lacke im Unterschied zu den Vergleichslacken deutlich.

**Patentansprüche**
**Patentansprüche für folgende Vertragsstaaten : AT, BE, CH, DE, FR, GB, IT, LI, NL, SE**

**1.** Polyesterpolyole des Hydroxylzahlbereichs von 80 bis 250, die Umsetzungsprodukte von
a) 52 bis 60 Mol-% einer Polyolkomponente mit
b) 48 bis 40 Mol-% einer Dicarbonsäure-Komponente
darstellen, dadurch gekennzeichnet, daß
a) die Polyolkomponente aus (i) 2 bis 30 Mol-% eines zweiwertigen aliphatischen Alkohols mit mindestens zwei Kohlenstoffatomen, der von Neopentylglykol verschieden ist oder eines Gemischs mehrerer derartiger Alkohole, (ii) 5 bis 40 Mol-% eines mindestens dreiwertigen aliphatischen Alkohols mit mindestens 3 Kohlenstoffatomen oder eines Gemischs mehrerer derartiger Alkohole, (iii) 20 bis 60 Mol-% Bis-(hydroxymethyl)-cyclohexan und (iv) 10 bis 50 Mol-% Neopentylglykol besteht, und
b) die Dicarbonsäurekomponente aus (v) 50 bis 99 Mol-% einer aliphatischen, gesättigten Dicarbonsäure oder einem Anhydrid einer derartigen Säure mit mindestens 2 Kohlenstoffatomen oder eines Gemischs mehrerer derartiger Säuren oder Anhydride und (vi) 0,5 bis 50 Mol-% einer aliphatischen ungesättigten Dicarbonsäure oder deren Anhydrid mit mindestens 4 Kohlenstoffatomen oder Gemischen derartiger Säuren oder Anhydride besteht,
wobei sich die unter a) und b) gemachten Prozentangaben jeweils zu 100 ergänzen.

**2.** Polyesterpolyole gemäß Anspruch 1, dadurch gekennzeichnet, daß
a) die Komponente (i) aus Hexandiol-1,6, die Komponente (ii) aus Trimethylolpropan, Glycerin, Pentaerythrit oder Gemischen derartiger Polyole und die Komponente (iii) aus 1,4-Bis-(hydroxymethyl)-cyclohexan und
b) die Komponente (v) aus Adipinsäure und die Komponente (vi) aus Maleinsäure und/oder Maleinsäureanhydrid
bestehen.

**3.** Verwendung der Polyesterpolyole gemäß Ansprüchen 1 und 2, gegebenenfalls in Abmischung mit anderen organischen Polyhydroxylverbindungen als Bindemittelkomponente für Zweikomponenten-Polyurethanlacke, die Lackpolyisocyanate, sowie gegebenenfalls die in der Polyurethanlacktechnologie üblichen Hilfs- und Zusatzmittel enthalten, bei der Herstellung von Lacküberzügen auf Kunststoffformteilen.

**4.** Verwendung gemäß Anspruch 3, dadurch gekennzeichnet, daß es sich bei dem mit Lacküberzügen zu versehenden Kunststofformteilen um flexible Kunststofformteile, wie sie im Automobilbau Verwendung finden, handelt.

**5.** Verwendung gemäß Anspruch 3 und 4, dadurch gekennzeichnet, daß es sich bei dem mit Lacküberzügen zu versehenden Substraten um in Gemischtbauweise hergestellte Konstruktionen aus Metallen und flexiblen Kunststoffen, wie sie im Automobilbau Verwendung finden, handelt.

**Patentansprüche für folgenden Vertragssaat : ES**

**1.** Verwendung von Polyesterpolyolen des Hydroxylzahlbereichs von 80 bis 250, die Umsetzungsprodukte von
 a) 52 bis 60 Mol-% einer Polyolkomponente mit
 b) 48 bis 40 Mol-% einer Dicarbonsäure-Komponente
darstellen, gegebenenfalls in Abmischung mit anderen organischen Polyhydroxylverbindungen als Bindemittelkomponente für Zweikomponenten-Polyurethanlacke, die Lackpolyisocyanate, sowie gegebenenfalls die in der Polyurethanlacktechnologie üblichen Hilfs- und Zusatzmittel enthalten, bei der Herstellung von Lacküberzügen auf Kunststofformteilen,
dadurch gekennzeichnet, daß
 a) die Polyolkomponente aus (i) 2 bis 30 Mol-% eines zweiwertigen aliphatischen Alkohols mit mindestens zwei Kohlenstoffatomen, der von Neopentylglykol verschieden ist oder eines Gemischs mehrerer derartiger Alkohole, (ii) 5 bis 40 Mol-% eines mindestens dreiwertigen aliphatischen Alkohols mit mindestens 3 Kohlenstoffatomen oder eines Gemischs mehrerer derartiger Alkohole, (iii) 20 bis 60 Mol-% Bis-(hydroxymethyl)-cyclohexan und (iv) 10 bis 50 Mol-% Neopentylglykol besteht, und
 b) die Dicarbonsäurekomponente aus (v) 50 bis 99 Mol-% einer aliphatischen, gesättigten Dicarbonsäure oder einem Anhydrid einer derartigen Säure mit mindestens 2 Kohlenstoffatomen oder eines Gemischs mehrerer derartiger Säuren oder Anhydride und (vi) 0,5 bis 50 Mol-% einer aliphatischen ungesättigten Dicarbonsäure oder deren Anhydrid mit mindestens 4 Kohlenstoffatomen oder Gemischen derartiger Säuren oder Anhydride besteht,
wobei sich die unter a) und b) gemachten Prozentangaben jeweils zu 100 ergänzen.

**2.** Verwendung gemäß Anspruch 1, dadurch gekennzeichnet, daß
 a) die Komponente (i) aus Hexandiol-1,6, die Komponente (ii) aus Trimethylolpropan, Glycerin, Pentaerythrit oder Gemischen derartiger Polyole und die Komponente (iii) aus 1,4-Bis-(hydroxymethyl)-cyclohexan und
 b) die Komponente (v) aus Adipinsäure und die Komponente (vi) aus Maleinsäure und/oder Maleinsäureanhydrid
bestehen.

**3.** Verwendung gemäß Anspruch 1 und 2, dadurch gekennzeichnet, daß es sich bei dem mit Lacküberzügen zu versehenden Kunststofformteilen um flexible Kunststofformteile, wie sie im Automobilbau Verwendung finden, handelt.

**4.** Verwendung gemäß Anspruch 1 bis 3, dadurch gekennzeichnet, daß es sich bei dem mit Lacküberzügen zu versehenden Substraten um in Gemischtbauweise hergestellte Konstruktionen aus Metallen und flexiblen Kunststoffen, wie sie im Automobilbau Verwendung finden, handelt.

**Claims**

**Claims for the following Contracting States : AT, BE, CH, DE, FR, GB, IT, LI, NL, SE**

**1.** Polyesterpolyols in the hydroxyl number range of from 80 to 250 which are reaction products of
 a) from 52 to 60 mol% of a polyol component and
 b) from 48 to 40 mol% of a dicarboxylic acid component,
characterised in that
 a) the polyol component consists of (i) from 2 to 30 mol% of a dihydric aliphatic alcohol having at least two carbon atoms other than neopentyl glycol, or a mixture of several such alcohols, (ii) from 5 to 40 mol% of an at least trihydric aliphatic alcohol having at least 3 carbon atoms or a fixture of several such alchols, (iii) from 20 to 60 mol% of bis-(hydroxymethyl)-cyclohexane and (iv) from 10 to 50 mol% of neopentyl glycol and

b) the dicarboxylic acid component consists of (v) from 50 to 99 mol% of an aliphatic saturated dicarboxylic acid or an anhydride of such an acid having at least 2 carbon atoms or a mixture of several such acids or anhydrides and (vi) from 0.5 to 50 mol% of an aliphatic unsaturated dicarboxylic acid or its anhydride having at least 4 carbon atoms or mixtures of such acids or anhydrides,

the percentages indicated under a) and b) adding up to 100.

2. Polyesterpolyols according to claim 1, characterised in that

a) component (i) consists of hexanediol-(1,6), component (ii) consists of trimethylolpropane, glycerol, pentaerythritol or mixtures of such polyols and component (iii) consists of 1,4-bis-(hydroxymethyl)-cyclohexane and

b) component (v) consists of adipic acid and component (vi) of maleic acid and/or maleic acid anhydride.

3. Use of the polyesterpolyols according to claims 1 and 2, optionally as mixtures with other organic polyhydroxyl compounds, as binder component for two-component polyurethane lacquers containing lacquer polyisocyanates and optionally the conventional auxiliary agents and additives of polyurethane technology, for the production of lacquer coats on synthetic resin moulded parts.

4. Use according to claim 3, characterised in that the synthetic resin moulded parts which are to be covered with lacquer coats are flexible synthetic resin parts such as are used in the construction of motor vehicles.

5. Use according to claims 3 and 4, characterised in that the substrates to be covered with lacquer coats are constructions of metal and flexible synthetic resins produced by a mixed construction method, such as are used in the construction of motor vehicles.

**Claims for the following Contracting State : ES**

1. Use of polyesterpolyols in the hydroxyl number range of from 80 to 250 which are reaction products of

a) from 52 to 60 mol% of a polyol component and

b) from 48 to 40 mol% of a dicarboxylic acid component, optionally as mixtures with other organic polyhydroxyl compounds, as binder component for two-component polyurethane lacquers containing lacquer polyisocyanates and optionally the conventional auxiliary agents and additives of polyurethane lacquer technology, for the production of lacquer coats on synthetic resin moulded parts, characterised in that

a) the polyol component consists of (i) from 2 to 30 mol% of a divalent aliphatic alcohol having at least two carbon atoms other than neopentylglycol, or a mixture of several such alcohols, (ii) from 5 to 40 mol% of an at least trihydric aliphatic alcohol having at least 3 carbon atoms or a mixture of several such alcohols, (iii) from 20 to 60 mol% of bis-(hydroxymethyl)-cyclohexane and (iv) from 10 to 50 mol% of neopentyl glycol and

b) the dicarboxylic acid component consists of (v) from 50 to 99 mol% of an aliphatic, saturated dicarboxylic acid or an anhydride of such an acid having at least 2 carbon atoms or a mixture of several such acids or anhydrides and (vi) from 0.5 to 50 mol% of an aliphatic unsaturated dicarboxylic acid or the anhydride thereof having at least 4 carbon atoms or mixtures of such acids or anhydrides,

the percentages indicated under a) and b) adding up to 100.

2. Use according to claim 1, characterised in that

a) component (i) consists of hexanediol-(1,6), component (ii) consists of trimethylolpropane, glycerol, pentaerythritol or mixtures of such polyols and component (iii) consists of 1,4-bis-(hydroxymethyl)-cyclohexane and

b) component (v) consists of adipic acid and component (vi) consists of maleic acid and/or maleic acid anhydride.

**3.** Use according to claims 1 and 2, characterised in that the synthetic resin moulded parts to be covered with lacquer coats are flexible synthetic resin parts such as are used in the construction of motor vehicles.

**4.** Use according to claims 1 to 3, characterised in that the substrates to be covered with lacquer coats are constructions of metals and flexible synthetic resins produced by a mixed construction method, such as are used in the construction of motor vehicles.

**Revendications**

**Revendications pour les Etats contractants suivants : AT, BE, CH, DE, FR, GB, IT, LI, NL, SE**

**1.** Polyester-polyols dont l'indice d'hydroxyle est compris dans la gamme de 80 à 250, qui sont les produits de la réaction de:
a) 52 à 60 moles % d'un composant polyol avec
b) 48 à 40 moles % d'un composant acide dicarboxylique
caractérisés en ce que:
a) le composant polyol est constitué de (i) 2 à 30 moles % d'un alcool aliphatique bivalent avec au moins 2 atomes de carbone, qui n'est pas du néopentylglycol, ou d'un mélange de plusieurs alcools de ce genre, (ii) 5 à 40 moles % d'un alcool aliphatique au moins trivalent avec au moins 3 atomes de carbone ou d'un mélange de plusieurs alcools de ce genre, (iii) 20 à 60 moles % de bis-(hydroxyméthyl)-cyclohexane et (iv) 10 à 50 moles % de néopentylglycol, et
b) le composant acide dicarboxylique est constitué de (v) 50 à 99 moles % d'un acide dicarboxylique aliphatique saturé ou d'un anhydride d'un acide de ce genre avec au moins deux atomes de carbone ou d'un mélange de plusieurs acides ou anhydrides de ce genre et (vi) de 0,5 à 50 moles % d'un acide dicarboxylique aliphatique non saturé ou de son anhydride avec au moins 4 atomes de carbone ou d'un mélange d'acides ou d'anhydrides de ce genre,
où les pourcentages indiqués sous a) et b) atteignent au total 100 %.

**2.** Polyester-polyols selon la revendication 1, caractérisés en ce que
a) le constituant (i) est formé d'hexanediol-1,6, le constituant (ii) de triméthylolpropane, de glycérine, de pentaérythrite ou d'un mélange de polyols de ce genre et le constituant (iii) est formé de 1,4-bis-(hydroxyméthyl)-cyclohexane et
b) le constituant (v) est formé d'acide adipique et le constituant (vi) d'acide maléique et/ou d'anhydride maléique.

**3.** Utilisation des polyester-polyols selon les revendications 1 et 2, éventuellement en mélange avec d'autres composés polyhydroxylés organiques servant de composants de liants pour les peintures, laques ou vernis de polyuréthane à deux composants, qui contiennent des polyisocyanates pour peintures ainsi qu'éventuellement les additifs et adjuvants habituels de la technologie des peintures, laques ou vernis de polyuréthane pour la réalisation de revêtement de peinture, laque ou vernis sur des pièces de forme en matière plastique.

**4.** Utilisation selon la revendication 3, caractérisée en ce que les pièces de forme en matière plastique à pourvoir de revêtement de peinture, laque ou vernis sont des pièces de forme flexibles en matière plastique, qui trouvent notamment des applications en construction automobile.

**5.** Utilisation selon les revendications 3 et 4, caractérisée en ce que les substrats à pourvoir de revêtement de peinture, laque ou vernis sont des constructions de type composites, formées de métaux et de matières plastiques flexibles, qui trouvent notamment des applications dans la construction automobile.

**Revendications pour l'Etat contractant suivant : ES**

**1.** Utilisation de polyester-polyols dont l'indice d'hydroxyle est compris dans la plage de 80 à 250, qui sont les produits de la réaction de:
a) 52 à 60 moles % d'un composant polyol avec
b) 48 à 40 moles % d'un composant acide dicarboxylique
éventuellement en mélange avec d'autres composés polyhydroxylés organiques servant de composants de liants pour les peintures, laques ou vernis de polyuréthane à deux composants, qui contiennent des polyisocaynates pour peintures ainsi qu'éventuellement les additifs et adjuvants habituels de la technologie des peintures, laques ou vernis de polyuréthane pour la réalisation de revêtement de peinture, laque ou vernis sur des pièces de forme en matière plastique.

caractérisée en ce que:

a) le composant polyol est constitué de (i) 2 à 30 moles % d'un alcool aliphatique bivalent avec au moins 2 atomes de carbone, qui n'est pas du néopentylglycol, ou d'un mélange de plusieurs alcools de ce genre, (ii) 5 à 40 moles % d'un alcool aliphatique au moins trivalent avec au moins 3 atomes de carbone ou d'un mélange de plusieurs alcools de ce genre, (iii) 20 à 60 moles % de bis-(hydroxyméthyl)-cyclohexane et (iv) 10 à 50 moles % de néopentylglycol, et

b) le composant acide dicarboxylique est constitué de (v) 50 à 99 moles % d'un acide dicarboxylique aliphatique saturé ou d'un anhydride d'un acide de ce genre avec au moins deux atomes de carbone ou d'un mélange de plusieurs acides ou anhydrides de ce genre et (vi) de 0,5 à 50 moles % d'un acide dicarboxylique aliphatique non saturé ou de son anhydride avec au moins 4 atomes de carbone ou d'un mélange d'acides ou d'anhydrides de ce genre,

où les pourcentages indiqués sous a) et b) atteignent au total 100 %.

2. Utilisation selon la revendication 1, caractérisée en ce que

a) le constituant (i) est formé d'hexanediol-1,6, le constituant (ii) de triméthylolpropane, de glycérine, de pentaérythrite ou d'un mélange de polyols de ce genre et le constituant (iii) est formé de 1,4-bis-(hydroxyméthyl)-cyclohexane et

b) le constituant (v) est formé d'acide adipique et le constituant (vi) d'acide maléique et/ou d'anhydride maléique.

3. Utilisation selon les revendications 1 et 2, caractérisée en que les pièces de forme en matière plastique à pourvoir de revêtement de peinture, laque ou vernis sont des pièces de forme flexibles en matière plastique, qui trouvent notamment des applications en construction automobile.

4. Utilisation selon les revendications 1 à 3, caractérisée en ce que les substrats à pourvoir de revêtement de peinture, laque ou vernis sont des constructions de type composites, formées de métaux et de matières plastiques flexibles, qui trouvent notamment des applications dans la construction automobile.